(19) Europäisches Patentamt
European Patent Office
Office européen des brevets

(11) **EP 4 668 743 A1**

(12) **EUROPEAN PATENT APPLICATION**
published in accordance with Art. 153(4) EPC

(43) Date of publication:
**24.12.2025 Bulletin 2025/52**

(21) Application number: **24769840.0**

(22) Date of filing: **07.03.2024**

(51) International Patent Classification (IPC):
**H04N 19/124** (2014.01)

(52) Cooperative Patent Classification (CPC):
**H04N 19/124; H04N 19/154; H04N 19/593**

(86) International application number:
**PCT/CN2024/080498**

(87) International publication number:
**WO 2024/188147 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.03.2023 CN 202310283307**

(71) Applicant: **Huawei Technologies Co., Ltd.**
**Shenzhen, Guangdong 518129 (CN)**

(72) Inventors:
• **WANG, Danni**
  **Shenzhen, Guangdong 518129 (CN)**
• **YANG, Haitao**
  **Shenzhen, Guangdong 518129 (CN)**
• **LUO, Yi**
  **Shenzhen, Guangdong 518129 (CN)**
• **FENG, Junkai**
  **Shenzhen, Guangdong 518129 (CN)**

(74) Representative: **Maiwald GmbH**
**Engineering**
**Elisenhof**
**Elisenstrasse 3**
**80335 München (DE)**

(54) **QUANTIZATION PARAMETER ACQUISITION METHOD AND APPARATUS**

(57) This application provides a quantization parameter obtaining method and apparatus. This application provides a quantization parameter obtaining method, which is applicable to a point prediction mode. The method includes: obtaining a bit depth of a current picture; obtaining a quantization parameter QP of a current coding unit CU, where the current CU belongs to the current picture; obtaining a picture complexity level of the current CU; obtaining a prediction residual value of a current point, where the current point is located in a first row of the current CU, a prediction value of the current point is a reconstruction value of a reference point, and the reference point is located on an upper side of the current point; and obtaining a QP of the current point based on the bit depth of the current picture, the QP of the current CU, the picture complexity level of the current CU, and the prediction residual value of the current point. In embodiments of this application, adaptation between a QP and picture content can be improved, quantization in a CU at a low granularity can be implemented, a subjective distortion difference caused by quantization in the CU is reduced, and subjective quality of flat content in the CU is effectively improved.

400

Obtain a bit depth of a current picture — 401

Obtain a QP of a current CU, where the current CU belongs to the current picture — 402

Obtain a complexity level of the current CU — 403

Obtain a prediction residual value of a current point, where the current point is located in a first row of the current CU, a prediction value of the current point is a reconstruction value of a reference point, and the reference point is located on an upper side of the current point — 404

Obtain a QP of the current point based on the bit depth of the current picture, the QP of the current CU, the complexity level of the current CU, and the prediction residual value of the current point — 405

FIG. 4

**Description**

**TECHNICAL FIELD**

This application relates to video encoding and decoding technologies, and in particular, to a quantization parameter obtaining method and apparatus.

**BACKGROUND**

Media data like video data is widely used in various devices, and a display interface and a display link are usually used for data transmission between different devices. In recent years, as performance of media collection devices is improved and people have an increasing requirement for video quality, a specification of video data is also rapidly improved, that is, resolution and a frame rate of a video are higher. However, a video with a higher specification has a larger data amount per unit time. This poses new challenges to a throughput of a display interface and/or a display link. When bandwidths of some display interfaces and/or some display links cannot meet a throughput requirement for transmitting a raw video, it is especially important to perform display interface compression on video content.

A typical procedure of display interface compression includes: At an input side interface, an encoder performs encoding operations such as prediction, quantization, and entropy encoding on an input single-frame picture, and compresses the input single-frame picture into a bitstream. The bitstream is transmitted to an output side interface over a display link. At the output side interface, a decoder performs decoding operations such as entropy decoding, dequantization, prediction, and reconstruction on the bitstream, and finally outputs a reconstructed picture. In an encoding process, a residual value generated through a prediction operation is quantized and then written into a bitstream; and in a decoding process, dequantization is performed on a syntax element to obtain the residual value. A quantization parameter (Quantization Parameter, QP) is a parameter used in the foregoing quantization/dequantization process. Generally, a larger QP value indicates a higher quantization degree. Adjusting the QP value directly affects a length of an encoded bitstream and quality of a decoded picture.

In view of this, it is expected that a technology can be used to improve adaptation between the QP and picture content as much as possible, to improve encoding and decoding efficiency.

**SUMMARY**

This application provides a method and an apparatus for encoding and decoding a region enhancement layer, to improve coding efficiency and coding precision of the enhancement layer.

According to a first aspect, this application provides a quantization parameter obtaining method. The method is applicable to a point prediction mode, and the method includes: obtaining a bit depth of a current picture; obtaining a quantization parameter QP of a current coding unit CU, where the current CU belongs to the current picture; obtaining a picture complexity level of the current CU; obtaining a prediction residual value of a current point, where the current point is located in a first row of the current CU, a prediction value of the current point is a reconstruction value of a reference point, and the reference point is located on an upper side of the current point; and obtaining a QP of the current point based on the bit depth of the current picture, the QP of the current CU, the picture complexity level of the current CU, and the prediction residual value of the current point.

In this embodiment of this application, in point prediction, a quantization parameter of a point at a specific location is adjusted, and point-level QP calculation is implemented. In this way, adaptation between a QP and picture content can be improved, quantization in a CU at a low granularity can be implemented, a subjective distortion difference caused by quantization in the CU is reduced, and subjective quality of flat content in the CU is effectively improved.

A frame of picture includes a plurality of pixels, and a bit depth of a picture indicates a number of bits occupied by each channel of a pixel in the picture. On an encoder side, the bit depth of the current picture is an attribute of the picture. The encoder side can directly obtain a raw picture. Therefore, the encoder side can directly obtain a bit depth based on the raw picture. On a decoder side, the bit depth of the current picture may be obtained by parsing a bitstream of the current picture.

In this embodiment of this application, the QP of the current CU may be obtained by a bit rate control module. On the decoder side, an input into the bit rate control module is the picture complexity level of the current CU and a number of coded bits of a previous CU (for example, a CU 1), and an output of the bit rate control module is the QP of the current CU. On the encoder side, an input into the bit rate control module is picture content of the current CU and a number of coded bits of a previous CU (for example, a CU 1), and an output of the bit rate control module is the QP of the current CU.

On the decoder side, the picture complexity level of the current CU may be obtained by parsing a bitstream. On the encoder side, the picture complexity level of the current CU may be obtained based on the picture content of the current CU, including the following steps.

1. Calculate a texture picture complexity level: The current CU is divided into several subblocks; for each subblock, a difference between adjacent pixel values may be calculated stepwise in a horizontal direction, a vertical direction, a diagonal direction, and the like; after absolute values of differences are summed, a complexity value corresponding to the subblock is obtained; the complexity value is compared with an agreed threshold to obtain a picture complexity level of the subblock; and after a rule-based operation is performed on picture complexity levels of all the subblocks, the texture picture complexity level of the current CU is obtained.

2. Calculate an IBC picture complexity level: An IBC similarity prediction sample matrix is obtained for the current CU based on an IBC similarity prediction mode; the current CU is divided into several subblocks; for each subblock, a sum of absolute values of differences between IBC similarity prediction samples of the subblock and original values is calculated and referred to as a SAD of the subblock; the SAD of the subblock is compared with an agreed threshold to obtain a picture complexity level of the subblock; and after a rule-based operation is performed on picture complexity levels of all the subblocks, the IBC picture complexity level of the current CU is obtained.

3. The picture complexity level of the current CU is a smaller value between the texture picture complexity level and the IBC picture complexity level.

After obtaining the picture complexity level of the current CU, the encoder side may perform entropy encoding on the picture complexity level of the current CU as a syntax element, to concatenate the picture complexity level of the current CU into the bitstream of the current picture, so that the decoder side can directly obtain the picture complexity level of the current CU by parsing the bitstream.

In this embodiment of this application, in point prediction, a quantization parameter of a point at a specific location in the current CU can be adjusted. The specific location may be a point that is in a first row (for example, a horizontal location of 0) of the current CU, and that uses a T prediction manner (the T prediction manner is to use a reconstruction value of a point on an upper side (that is, the reference point) of a current point as a prediction value of the current point) in point prediction.

The point at the specific location may be located at a first location in the first row of the current CU or at a non-first location in the first row of the current CU. In view of this, the prediction residual value of the current point may be obtained in the following two methods:

Method 1: When the current point is located at the first location in the first row of the current CU, obtain the reconstruction value of the reference point and a reconstruction value of a first point, where the first point is located on a right side of the reference point; and obtain the prediction residual value of the current point based on the reconstruction value of the reference point and the reconstruction value of the first point.

For example, the prediction residual value of the current point may be obtained through calculation according to the following formula (6):

$$PredResiTmp = Abs(\boldsymbol{I}[x][y-1] - \boldsymbol{I}[x+1][y-1]) \ (6),$$

where
PredResiTmp indicates the prediction residual value of the current point, I indicates a reconstructed sample value matrix of the current picture, x indicates an element in an $x^{th}$ column of the reconstructed sample value matrix, and y indicates an element in a $y^{th}$ row of the reconstructed sample value matrix.

Method 2: When the current point is located at the non-first location in the first row of the current CU, obtain the reconstruction value of the reference point, a reconstruction value of a first point, and a reconstruction value of a second point, where the first point is located on a right side of the reference point, and the second point is located on a left side of the reference point; and obtain the prediction residual value of the current point based on the reconstruction value of the reference point, the reconstruction value of the first point, and the reconstruction value of the second point.

For example, the prediction residual value of the current point may be obtained through calculation according to the following formula (7):

PredResiTmp = (Abs(I[x][y - 1] - I[x - 1][y - 1])) + (Abs(I[x][y - 1] - I[x + 1][y - 1]))     (7),

where
PredResiTmp indicates the prediction residual value of the current point, I indicates a reconstructed sample value matrix of the current picture, x indicates an element in an $x^{th}$ column of the reconstructed sample value matrix, and y indicates an element in a $y^{th}$ row of the reconstructed sample value matrix.

For example, two points that use the T prediction manner are selected from the first row of the current CU. One point T1 is located at the first location in the first row of the current CU, and the other point T2 is located at a non-first location in the first row of the current CU. It is assumed that the locations of the two points are denoted as (x,y).

For the point T1:

A prediction residual value is calculated by using two points on an upper side and a right side of the upper side of the point T1. Locations of the two points are respectively denoted as (x,y-1) and (x+1,y-1).

According to encoding and decoding sequences from left to right and from top to bottom, reconstruction values of the two points are obtained before the current point (T1). Therefore, the reconstruction values may be obtained from the corresponding locations in the reconstructed sample value matrix I of the current picture, which are I[x][y-1] and I[x+1][y-1] respectively.

In view of this, the prediction residual value of the current point may be obtained according to the foregoing formula (6).

For the point T2:

A prediction residual value is calculated by using three points on an upper side and a left side and a right side of the upper side of the point T2. Locations of the three points are respectively denoted as (x-1,y-1), (x,y-1), and (x+1,y-1).

According to encoding and decoding sequences from left to right and from top to bottom, reconstruction values of the three points are obtained before the current point (T1). Therefore, the reconstruction values may be obtained from the corresponding locations in the reconstructed sample value matrix I of the current picture, which are I[x-1][y-1], I[x][y-1], and I[x+1][y-1] respectively.

In view of this, the prediction residual value of the current point may be obtained according to the foregoing formula (7).

According to the foregoing process, in this embodiment of this application, point prediction can be implemented, to obtain a prediction residual value of a point. In this way, prediction in a CU at a low granularity can be implemented, so that the prediction process is more accurate and complies with the picture content of the CU.

In this embodiment of this application, an adjustment lower limit of the QP of the current point is first obtained based on the bit depth of the current picture, the picture complexity level of the current CU, and the prediction residual value of the current point; and the QP of the current point is obtained based on the picture complexity level of the current CU, the QP of the current CU, and the adjustment lower limit.

The adjustment lower limit of the QP of the current point may be obtained as follows:

When a first condition is met, obtain the adjustment lower limit of the QP of the current point through calculation according to the following formula (1):

$$JndQp = X2 + Clip(0, X3, (BitDepth - X4) \gg X5) \ (1),$$

where

the first condition includes: $k \leq X1$, and $PredResiTmp \leq ResiThres0$; or

when the first condition is not met, obtain the adjustment lower limit of the QP of the current point through calculation according to the following formula (2):

$$JndQp = Clip(0, X3, (BitDepth - X4) \gg X5) + X6 \ (2),$$

where

JndQp indicates the adjustment lower limit of the QP of the current point, BitDepth indicates the bit depth of the current picture, k indicates the picture complexity level of the current CU, PredResiTmp indicates the prediction residual value of the current point, X1, X2, X3, X4, X5, and X6 are preset parameters, and ResiThres0 indicates a zeroth gradient threshold for QP adjustment.

The QP of the current point may be obtained as follows:

When a second condition is met, obtain the QP of the current point through calculation according to the following formula (3):

$$PixelQp = Max(Qp - X7, JndQp) \ (3),$$

where

the second condition includes: $Qp > JndQp$, $PredResiTmp \leq ResiThres0$, and $k \geq ComplexTh$;

when the second condition is not met and a third condition is met, obtain the QP of the current point through calculation according to the following formula (4):

$$PixelQp = Max(Qp - X8, JndQp) \ (4),$$

where
the third condition includes: Qp>JndQp, and PredResiTmp≤ResiThres1; or
when both the second condition and the third condition are not met, obtain the QP of the current point through calculation according to the following formula (5):

$$PixelQp = Qp \ (5),$$

where
PixelQp indicates the QP of the current point, k indicates the picture complexity level of the current CU, PredResiTmp indicates the prediction residual value of the current point, Qp indicates the QP of the current CU, JndQp indicates the adjustment lower limit, X7 and X8 are preset parameters, ResiThres0 indicates the zeroth gradient threshold for QP adjustment, ResiThres1 indicates a first gradient threshold for QP adjustment, and ComplexTh indicates a complexity threshold for QP adjustment. Optionally, ComplexTh=2.

According to the foregoing process, in this embodiment of this application, point-level QP adjustment may be implemented, to obtain an adjusted QP of a point at a specific location, and point-level QP calculation is implemented. In this way, adaptation between a QP and picture content can be improved, quantization in a CU at a low granularity can be implemented, a subjective distortion difference caused by quantization in the CU is reduced, and subjective quality of flat content in the CU is effectively improved.

According to a second aspect, this application provides a quantization parameter obtaining apparatus. The apparatus is applicable to a point prediction mode, and the apparatus includes: an obtaining module, configured to: obtain a bit depth of a current picture; obtain a quantization parameter QP of a current coding unit CU, where the current CU belongs to the current picture; and obtain a picture complexity level of the current CU; a point prediction module, configured to obtain a prediction residual value of a current point, where the current point is located in a first row of the current CU, a prediction value of the current point is a reconstruction value of a reference point, and the reference point is located on an upper side of the current point; and a bit rate control module, configured to obtain a QP of the current point based on the bit depth of the current picture, the QP of the current CU, the picture complexity level of the current CU, and the prediction residual value of the current point.

In a possible implementation, the bit rate control module is specifically configured to: obtain an adjustment lower limit of the QP of the current point based on the bit depth of the current picture, the picture complexity level of the current CU, and the prediction residual value of the current point; and obtain the QP of the current point based on the picture complexity level of the current CU, the QP of the current CU, and the adjustment lower limit.

In a possible implementation, the bit rate control module is specifically configured to: when a first condition is met, obtain the adjustment lower limit of the QP of the current point through calculation according to the following formula (1):

$$JndQp = X2 + Clip(0, X3, (BitDepth - X4) \gg X5) \ (1),$$

where

the first condition includes: k≤X1, and PredResiTmp≤ResiThres0; or
when the first condition is not met, obtain the adjustment lower limit of the QP of the current point through calculation according to the following formula (2):

$$JndQp = Clip(0, X3, (BitDepth - X4) \gg X5) + X6 \ (2),$$

where
JndQp indicates the adjustment lower limit of the QP of the current point, BitDepth indicates the bit depth of the current picture, k indicates the picture complexity level of the current CU, PredResiTmp indicates the prediction residual value of the current point, X1, X2, X3, X4, X5, and X6 are preset parameters, and ResiThres0 indicates a zeroth gradient threshold for QP adjustment.

In a possible implementation, the bit rate control module is specifically configured to: when a second condition is met, obtain the QP of the current point through calculation according to the following formula (3):

$$PixelQp = Max(Qp - X7, JndQp) \ (3),$$

where

the second condition includes: Qp>JndQp, PredResiTmp≤ResiThres0, and k≥ComplexTh;
when the second condition is not met and a third condition is met, obtain the QP of the current point through calculation according to the following formula (4):

$$PixelQp = Max(Qp - X8, JndQp) \ (4),$$

where
the third condition includes: Qp>JndQp, and PredResiTmp≤ResiThres1; or
when both the second condition and the third condition are not met, obtain the QP of the current point through calculation according to the following formula (5):

$$PixelQp = Qp \ (5),$$

where
PixelQp indicates the QP of the current point, k indicates the picture complexity level of the current CU, PredResiTmp indicates the prediction residual value of the current point, Qp indicates the QP of the current CU, JndQp indicates the adjustment lower limit, X7 and X8 are preset parameters, ResiThres0 indicates the zeroth gradient threshold for QP adjustment, ResiThres1 indicates a first gradient threshold for QP adjustment, and ComplexTh indicates a complexity threshold for QP adjustment.

In a possible implementation, the point prediction module is specifically configured to: when the current point is located at a first location in the first row of the current CU, obtain the reconstruction value of the reference point and a reconstruction value of a first point, where the first point is located on a right side of the reference point; and obtain the prediction residual value of the current point based on the reconstruction value of the reference point and the reconstruction value of the first point.

In a possible implementation, the point prediction module is specifically configured to: when the current point is located at a non-first location in the first row of the current CU, obtain the reconstruction value of the reference point, a reconstruction value of a first point, and a reconstruction value of a second point, where the first point is located on a right side of the reference point, and the second point is located on a left side of the reference point; and obtain the prediction residual value of the current point based on the reconstruction value of the reference point, the reconstruction value of the first point, and the reconstruction value of the second point.

In a possible implementation, the point prediction module is specifically configured to obtain the prediction residual value of the current point through calculation according to the following formula (6):

$$PredResiTmp = Abs(\boldsymbol{I}[x][y-1] - \boldsymbol{I}[x+1][y-1]) \ (6),$$

where
PredResiTmp indicates the prediction residual value of the current point, I indicates a reconstructed sample value matrix of the current picture, x indicates an element in an $x^{th}$ column of the reconstructed sample value matrix, and y indicates an element in a $y^{th}$ row of the reconstructed sample value matrix.

In a possible implementation, the point prediction module is specifically configured to obtain the prediction residual value of the current point through calculation according to the following formula (7):

$PredResiTmp = (Abs(\boldsymbol{I}[x][y - 1] - \boldsymbol{I}[x - 1][y - 1])) + (Abs(I[x][y - 1] - \boldsymbol{I}[x + 1][y - 1]))$ (7),

where
PredResiTmp indicates the prediction residual value of the current point, I indicates a reconstructed sample value matrix of the current picture, x indicates an element in an $x^{th}$ column of the reconstructed sample value matrix, and y indicates an element in a $y^{th}$ row of the reconstructed sample value matrix.

According to a third aspect, this application provides a decoder, including: one or more processors; and a memory, configured to store one or more programs. When the one or more programs are executed by the one or more processors, the one or more processors are enabled to implement the method according to any one of the possible implementations of the first aspect.

According to a fourth aspect, this application provides an encoder, including: one or more processors; and a memory, configured to store one or more programs. When the one or more programs are executed by the one or more processors, the one or more processors are enabled to implement the method according to any one of the possible implementations of the first aspect.

According to a fifth aspect, this application provides a computer-readable storage medium, including a computer program. When the computer program is executed on a computer, the computer is enabled to perform the method according to any one of the possible implementations of the first aspect.

According to a sixth aspect, this application provides a computer program product. The computer program product includes instructions. When the instructions are run on a computer or a processor, the computer or the processor is enabled to implement the method according to any one of the possible implementations of the first aspect.

According to a seventh aspect, this application provides a bitstream. The bitstream may be stored in a computer-readable storage medium, or transmitted in a signal form like an electromagnetic wave. The bitstream includes encoded picture data and a syntax element. The syntax element includes a quantization parameter of a current point in point prediction. The current point is located in a first row of a current CU, and a prediction value of the current point is a reconstruction value of a reference point. The reference point is located on an upper side of the current point.

**BRIEF DESCRIPTION OF DRAWINGS**

FIG. 1 is a diagram of a decoding architecture;

FIG. 2 is a diagram of an encoding architecture;

FIG. 3 is a diagram of point prediction;

FIG. 4 is a flowchart of a process 400 of a quantization parameter obtaining method according to an embodiment of this application;

FIG. 5 is a diagram of point selection for calculating a prediction residual value;

FIG. 6 is a flowchart of obtaining a quantization parameter by a decoder side;

FIG. 7 is a flowchart of obtaining a quantization parameter by an encoder side; and

FIG. 8 is a diagram of an example structure of a quantization parameter obtaining apparatus 800 according to an embodiment of this application.

**DESCRIPTION OF EMBODIMENTS**

To make objectives, technical solutions, and advantages of this application clearer, the following clearly and completely describes the technical solutions in this application with reference to accompanying drawings in this application. It is clear that the described embodiments are a part rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, the terms "first", "second", and the like are merely intended for distinguishing and description, and shall not be understood as indicating or implying relative importance, or indicating or implying a sequence. In addition, the terms "include", "have", and any variant thereof are intended to cover non-exclusive inclusion, for example, include a series of steps or units. A method, system, product, or device is not necessarily limited to those expressly listed steps or units, but may include other steps or units that are not expressly listed or that are inherent to such a process, method, product, or device.

It should be understood that in this application, "at least one" means one or more, and "a plurality of" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

For ease of understanding, the following describes related terms.

Interface compression: An electronic device uses a display interface when transmitting a video, and performs compression (encoding) and decompression (decoding) operations on video data that passes through the display interface. This is referred to as interface compression for short.

Bitstream: The bitstream is a binary stream generated after video data is encoded.

Bit rate control: In a process of adjusting an output bit rate during encoding, the output bit rate is adjusted by analyzing information such as current picture content and a bitstream buffer margin and by changing an encoding quantization parameter and an encoding mode. This is referred to as rate control for short.

Quantization parameter (Quantization Parameter, QP): During encoding, a residual value generated by a prediction operation or a coefficient generated by a transform operation is quantized and then written into a bitstream. During decoding, a syntax element is dequantized to obtain the residual value or the coefficient. The QP is a parameter used in the foregoing quantization/dequantization process. Generally, a larger QP value indicates a more obvious quantization degree. Adjusting the QP value directly affects a length of an encoded bitstream and quality of a decoded picture.

Constant bit rate (Constant Bit Rate, CBR) strategy: The constant bit rate strategy is a rate control strategy featured by consistent lengths of bitstreams output by an encoder per unit time.

Block prediction: The block prediction is a prediction operation in which a block is used as a prediction unit, and a reconstruction value of a reconstructed point in a current coding unit (Code Unit, CU) cannot be used as a prediction reference value of a subsequent point in the current CU.

Point prediction: The point prediction is a prediction operation in which a point is used as a prediction unit, and a reconstruction value of a reconstructed point in a current coding unit can be used as a prediction reference value of a subsequent point in the current CU.

Embodiments of this application relate to obtaining a QP. The following describes related technologies.

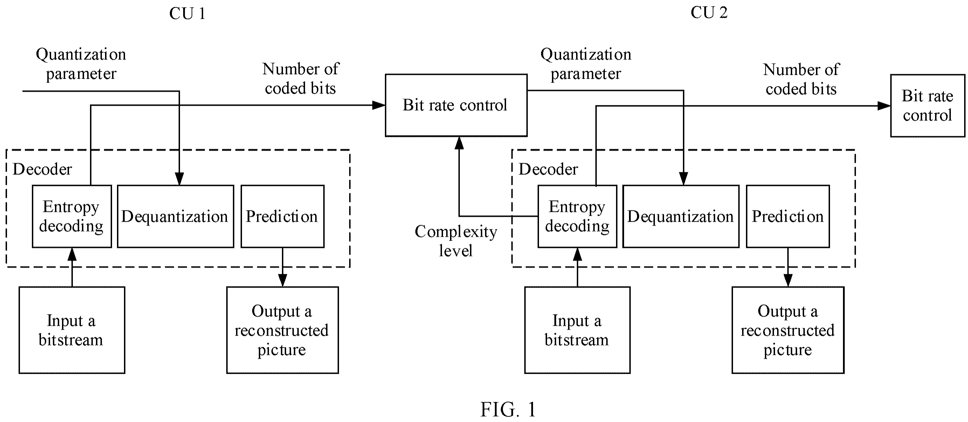

FIG. 1 is a diagram of a decoding architecture. As shown in FIG. 1, after a bitstream of any coding unit (a CU 1 or a CU 2 in the figure) is input into a decoder, a decoding process, for example, entropy decoding, dequantization, and prediction, is performed, and finally a reconstructed picture of the CU is output.

In this decoding framework, when a current CU (for example, the CU 2) is processed, an input into a bit rate control module is a picture complexity level of the current CU and a number of coded bits of a previous CU (for example, the CU 1), and an output of the bit rate control module is a quantization parameter of the current CU. The picture complexity level of the current CU may be obtained by performing entropy decoding on a corresponding bitstream, and the number of coded bits of the previous CU may be obtained by performing entropy decoding on the corresponding bitstream.

A prediction sample (also referred to as a prediction value/prediction block) is obtained for the current CU through a prediction module. Then, a reconstructed sample (also referred to as a reconstruction value/residual block) is calculated by using the prediction sample and a residual sample (also referred to as a residual value/reconstructed block) obtained through dequantization. Finally, a reconstructed picture is output. A prediction mode of the prediction module may include point prediction and block prediction. A prediction mode in this embodiment of this application is point prediction.

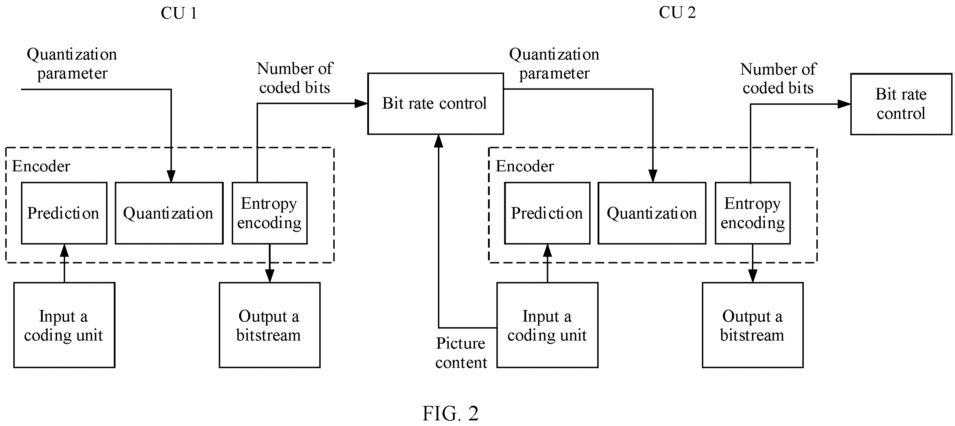

FIG. 2 is a diagram of an encoding architecture. As shown in FIG. 2, a current picture is divided into picture blocks (coding units). After any coding unit (a CU 1 or a CU 2 in the figure) is input into an encoder, an encoding process, for example, prediction, quantization, and entropy encoding, is performed, and a bitstream of the CU is output. Bitstreams of all the CUs are concatenated to obtain a bitstream of the current picture.

In this encoding framework, when a current CU (for example, the CU 2) is processed, an input into a bit rate control module is picture content of the current CU and a number of coded bits of a previous CU (for example, the CU 1), and an output of the bit rate control module is a quantization parameter of the current CU. A picture complexity level of the current CU may be obtained based on the picture content of the current CU, and the number of coded bits of the previous CU may be obtained through entropy encoding.

The picture complexity level of the current CU may be obtained based on the picture content of the current CU as follows:

1. Calculate a texture picture complexity level: The current CU is divided into several subblocks; for each subblock, a difference between adjacent pixel values may be calculated stepwise in a horizontal direction, a vertical direction, a diagonal direction, and the like; after absolute values of differences are summed, a complexity value corresponding to the subblock is obtained, and the complexity value is compared with an agreed threshold to obtain a picture complexity level of the subblock; and after a rule-based operation is performed on picture complexity levels of all the subblocks, the texture picture complexity level of the current CU is obtained.

2. Calculate an intra block copy (Intra Block Copy, IBC) picture complexity level: An IBC similarity prediction sample matrix is obtained for the current CU based on an IBC similarity prediction mode; the current CU is divided into several subblocks; for each subblock, a sum of absolute values of differences between IBC similarity prediction samples of the subblock and original values is calculated and referred to as a sum of absolute difference (Sum of Absolute Difference, SAD) of the subblock; the SAD of the subblock is compared with an agreed threshold to obtain a picture complexity level of the subblock; and after a rule-based operation is performed on picture complexity levels of all the subblocks, the IBC picture complexity level of the current CU is obtained.

3. The picture complexity level of the current CU is a smaller value between the texture picture complexity level and the IBC picture complexity level.

A prediction sample is obtained for the current CU through a prediction module. Then, quantization and entropy encoding is performed on a difference (that is, a residual sample) between the prediction sample and an original sample. Finally, a bitstream is output. A prediction mode of the prediction module may include point prediction and block prediction. A prediction mode in this embodiment of this application is point prediction.

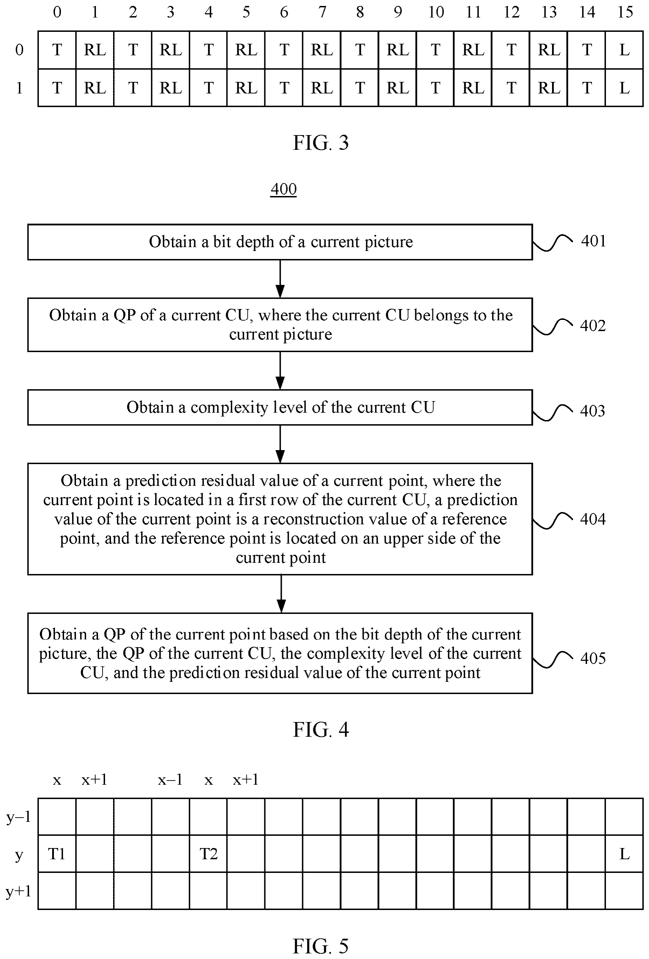

FIG. 3 is a diagram of point prediction. As shown in FIG. 3, point prediction includes three prediction manners: a T prediction manner, an RL prediction manner, and an L prediction manner.

In the T prediction manner, a reconstruction value of a point on an upper side of a current point is used as a prediction value of the current point.

In the L prediction manner, a reconstruction value of a point on a left side of a current point is used as a prediction value of the current point.

In the RL prediction manner, reconstruction values of points respectively on a left side and a right side of a current point are averaged to obtain a prediction value of the current point. A size of a CU in the figure is $16 \times 2$. From left to right, a horizontal location identifier of a point in the first column is 0, and from top to bottom, a vertical location identifier of a point in the first row is 0. In view of this, in a horizontal direction of the CU, the T prediction manner is used for points in even-numbered columns, the L prediction manner is used for points in the last column, and the RL prediction manner is used for points at other locations.

It should be noted that FIG. 3 shows only a size of one CU and a point prediction manner used by the CU as an example. However, this is not limited, and this is not specifically limited in embodiments of this application.

To improve adaptation between a QP and picture content and improve encoding and decoding efficiency, embodiments of this application provide a quantization parameter obtaining method and apparatus. The following describes the technical solutions in embodiments of this application.

FIG. 4 is a flowchart of a process 400 of a quantization parameter obtaining method according to an embodiment of this application. The process 400 may be performed by the decoder in the embodiment shown in FIG. 1 or the encoder in the embodiment shown in FIG. 2. The process 400 is described as a series of steps or operations. It should be understood that the process 400 may be performed in various sequences and/or simultaneously, and is not limited to an execution sequence shown in FIG. 4. The process 400 may include the following steps.

Step 401: Obtain a bit depth of a current picture.

A frame of picture includes a plurality of pixels, and a bit depth of a picture indicates a number of bits occupied by each channel of a pixel in the picture.

On an encoder side, the bit depth of the current picture is an attribute of the picture. The encoder side can directly obtain a raw picture. Therefore, the encoder side can directly obtain a bit depth based on the raw picture.

On a decoder side, the bit depth of the current picture may be obtained by parsing a bitstream of the current picture.

Step 402: Obtain a QP of a current CU, where the current CU belongs to the current picture.

In this embodiment of this application, the QP of the current CU may be obtained by a bit rate control module (for example, as shown in FIG. 1 and FIG. 2).

On the decoder side, an input into the bit rate control module is a picture complexity level of the current CU and a number of coded bits of a previous CU (for example, a CU 1), and an output of the bit rate control module is the QP of the current CU.

On the encoder side, an input into the bit rate control module is picture content of the current CU and a number of coded bits of a previous CU (for example, a CU 1), and an output of the bit rate control module is the QP of the current CU.

Step 403: Obtain the picture complexity level of the current CU.

On the decoder side, the picture complexity level of the current CU may be obtained by parsing a bitstream.

On the encoder side, the picture complexity level of the current CU may be obtained based on the picture content of the current CU, and the following steps are included.

1. Calculate a texture picture complexity level: The current CU is divided into several subblocks, where for each subblock, a difference between adjacent pixel values may be calculated stepwise in a horizontal direction, a vertical direction, a diagonal direction, and the like; after absolute values of differences are summed, a complexity value corresponding to the subblock is obtained, and the complexity value is compared with an agreed threshold to obtain a picture complexity level of the subblock; and after a rule-based operation is performed on picture complexity levels of all the subblocks, the texture picture complexity level of the current CU is obtained.

2. Calculate an IBC picture complexity level: An IBC similarity prediction sample matrix is obtained for the current CU based on an IBC similarity prediction mode; the current CU is divided into several subblocks; for each subblock, a sum of absolute values of differences between IBC similarity prediction samples of the subblock and original values is calculated and referred to as a SAD of the subblock; the SAD of the subblock is compared with an agreed threshold to obtain a picture complexity level of the subblock; and after a rule-based operation is performed on picture complexity levels of all the subblocks, the IBC picture complexity level of the current CU is obtained.

3. The picture complexity level of the current CU is a smaller value between the texture picture complexity level and the IBC picture complexity level.

After obtaining the picture complexity level of the current CU, the encoder side may perform entropy encoding on the picture complexity level of the current CU as a syntax element, to concatenate the picture complexity level of the current CU into the bitstream of the current picture, so that the decoder side can directly obtain the picture complexity level of the current CU by parsing the bitstream.

Step 404: Obtain a prediction residual value of a current point, where the current point is located in a first row of the current CU, a prediction value of the current point is a reconstruction value of a reference point, and the reference point is located on an upper side of the current point.

In this embodiment of this application, in point prediction, a quantization parameter of a point at a specific location in the current CU can be adjusted. The specific location may be a point that is in a first row (for example, a horizontal location of 0) of the current CU, and that uses a T prediction manner (the T prediction manner is to use a reconstruction value of a point on an upper side (that is, the reference point) of a current point as a prediction value of the current point) in point prediction. For example, refer to FIG. 3. A point in a row 0 and an even-numbered column is the point at the specific location, and may be used as the foregoing current point to adjust the QP thereof.

Still refer to FIG. 3, there are two cases of the point at the specific location. One is a point at a (0,0) location, that is, a first location in the first row of the current CU, and the other is a point at a non-(0,0) location, that is, a non-first location in the first row of the current CU. In view of this, the prediction residual value of the current point may be obtained in the following two methods:

Method 1: When the current point is located at the first location in the first row of the current CU, obtain the reconstruction value of the reference point and a reconstruction value of a first point, where the first point is located on a right side of the reference point; and obtain the prediction residual value of the current point based on the reconstruction value of the reference point and the reconstruction value of the first point.

For example, the prediction residual value of the current point may be obtained through calculation according to the following formula (6):

$$PredResiTmp = Abs(I[x][y-1] - I[x+1][y-1])\ (6),$$

where

PredResiTmp indicates the prediction residual value of the current point, I indicates a reconstructed sample value matrix of the current picture, x indicates an element in an $x^{th}$ column of the reconstructed sample value matrix, and y indicates an element in a $y^{th}$ row of the reconstructed sample value matrix.

Method 2: When the current point is located at the non-first location in the first row of the current CU, obtain the reconstruction value of the reference point, a reconstruction value of a first point, and a reconstruction value of a second point, where the first point is located on a right side of the reference point, and the second point is located on a left side of the reference point; and obtain the prediction residual value of the current point based on the reconstruction value of the reference point, the reconstruction value of the first point, and the reconstruction value of the second point.

For example, the prediction residual value of the current point may be obtained through calculation according to the following formula (7):

PredResiTmp = (Abs(I[x][y - 1] - I[x - 1][y - 1])) + (Abs(I[x][y - 1] - I[x + 1][y - 1]))                    (7),

where

PredResiTmp indicates the prediction residual value of the current point, I indicates a reconstructed sample value matrix of the current picture, x indicates an element in an $x^{th}$ column of the reconstructed sample value matrix, and y indicates an element in a $y^{th}$ row of the reconstructed sample value matrix.

For example, FIG. 5 is a diagram of point selection for calculating the prediction residual value. As shown in FIG. 5, a size of the current CU is 16×2, including the $y^{th}$ row (the first row of the current CU) and a $(y+1)^{th}$ row (a second row of the current CU). A (y-1)th row is a second row of a CU on an upper side of the current CU. Two points that use the T prediction manner are selected from the first row of the current CU. One point T1 is located at the first location in the first row of the current CU, and the other point T2 is located at the non-first location in the first row of the current CU. It is assumed that the locations of the two points are denoted as (x,y).

For the point T1:
A prediction residual value is calculated by using two points on an upper side and a right side of the upper side of the point T1. Locations of the two points are respectively denoted as (x,y-1) and (x+1,y-1).

According to encoding and decoding sequences from left to right and from top to bottom, reconstruction values of the two points are obtained before the current point (T1). Therefore, the reconstruction values may be obtained from the corresponding locations in the reconstructed sample value matrix I of the current picture, which are **I**[x][y-1] and **I**[x+1][y-1] respectively.

In view of this, the prediction residual value of the current point may be obtained according to the foregoing formula (6).

For the point T2:
A prediction residual value is calculated by using three points on an upper side and a left side and a right side of the upper side of the point T2. Locations of the three points are respectively denoted as (x-1,y-1), (x,y-1), and (x+1,y-1).

According to encoding and decoding sequences from left to right and from top to bottom, reconstruction values of the three points are obtained before the current point (T1). Therefore, the reconstruction values may be obtained from the corresponding locations in the reconstructed sample value matrix I of the current picture, which are I[x-1][y-1], I[x][y-1], and I[x+1][y-1] respectively.

In view of this, the prediction residual value of the current point may be obtained according to the foregoing formula (7).

According to the foregoing process, in this embodiment of this application, point prediction can be implemented, to obtain a prediction residual value of a point. In this way, prediction in a CU at a low granularity can be implemented, so that a prediction process is more accurate and complies with the picture content of the CU.

Step 405: Obtain a QP of the current point based on the bit depth of the current picture, the QP of the current CU, the picture complexity level of the current CU, and the prediction residual value of the current point.

In this embodiment of this application, an adjustment lower limit of the QP of the current point is first obtained based on the bit depth of the current picture, the picture complexity level of the current CU, and the prediction residual value of the current point; and the QP of the current point is obtained based on the picture complexity level of the current CU, the QP of the current CU, and the adjustment lower limit.

The adjustment lower limit of the QP of the current point may be obtained as follows:
When a first condition is met, obtain the adjustment lower limit of the QP of the current point through calculation according to the following formula (1):

$$JndQp = X2 + Clip(0, X3, (BitDepth - X4) \gg X5) \ (1),$$

where

the first condition includes: k≤X1, and PredResiTmp≤ResiThres0; or
when a first condition is not met, obtain the adjustment lower limit of the QP of the current point through calculation according to the following formula (2):

$$JndQp = Clip(0, X3, (BitDepth - X4) \gg X5) + X6 \ (2),$$

where
JndQp indicates the adjustment lower limit of the QP of the current point, BitDepth indicates the bit depth of the current picture, k indicates the picture complexity level of the current CU, PredResiTmp indicates the prediction residual value of the current point, X1, X2, X3, X4, X5, and X6 are preset parameters, and ResiThres0 indicates a zeroth gradient threshold for QP adjustment.

The QP of the current point may be obtained as follows:
When a second condition is met, obtain the QP of the current point through calculation according to the following formula (3):

$$PixelQp = Max(Qp - X7, JndQp) \ (3),$$

where

the second condition includes: Qp>JndQp, PredResiTmp≤ResiThres0, and k≥ComplexTh;
when a second condition is not met and a third condition is met, obtain the QP of the current point through calculation according to the following formula (4):

$$PixelQp = Max(Qp - X8, JndQp)\ (4),$$

where
the third condition includes: Qp>JndQp, and PredResiTmp≤ResiThres1; or
when both a second condition and a third condition are not met, obtain the QP of the current point through calculation according to the following formula (5):

$$PixelQp = Qp\ (5),$$

where
PixelQp indicates the QP of the current point, k indicates the picture complexity level of the current CU, PredResiTmp indicates the prediction residual value of the current point, Qp indicates the QP of the current CU, JndQp indicates the adjustment lower limit, X7 and X8 are preset parameters, ResiThres0 indicates the zeroth gradient threshold for QP adjustment, ResiThres1 indicates a first gradient threshold for QP adjustment, and ComplexTh indicates a complexity threshold for QP adjustment. Optionally, ComplexTh=2.

According to the foregoing process, in this embodiment of this application, point-level QP adjustment may be implemented, to obtain an adjusted QP of a point at a specific location, and point-level QP calculation is implemented. In this way, adaptation between a QP and picture content can be improved, quantization in a CU at a low granularity can be implemented, a subjective distortion difference caused by quantization in the CU is reduced, and subjective quality of flat content in the CU is effectively improved.

In this embodiment of this application, in point prediction, a quantization parameter of a point at a specific location is adjusted, and point-level QP calculation is implemented. In this way, adaptation between a QP and picture content can be improved, quantization in a CU at a low granularity can be implemented, a subjective distortion difference caused by quantization in the CU is reduced, and subjective quality of flat content in the CU is effectively improved.

The following describes the technical solutions in the embodiments of this application by using specific embodiments.

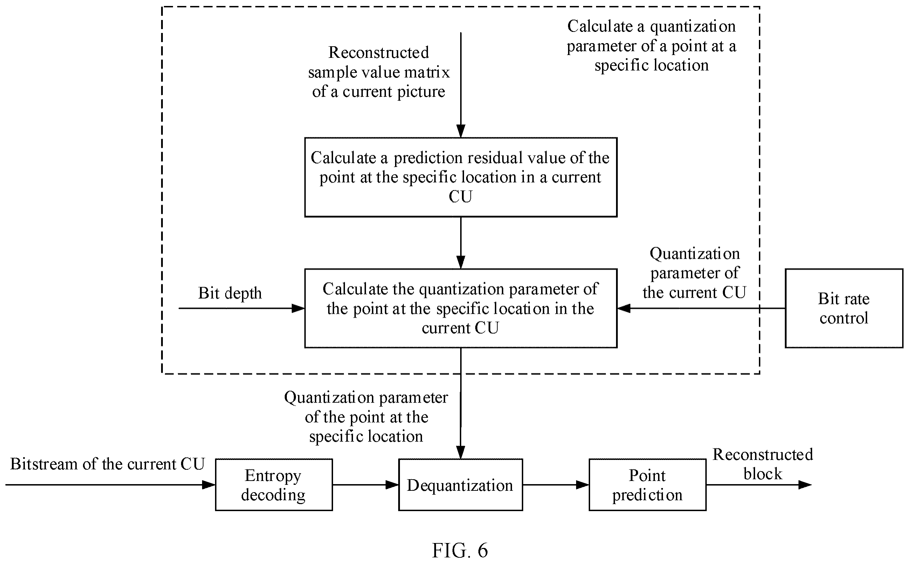

FIG. 6 is a flowchart of obtaining a quantization parameter by a decoder side. As shown in FIG. 6, on the decoder side, a quantization parameter of a point (corresponding to the current point) at a specific location in a current CU is adjusted in point prediction. The specific location is a location that is located in a first row of the current CU and that uses a T prediction manner.

After a bitstream of the current CU is input to a decoder, entropy decoding, dequantization, and point prediction are performed, and finally a reconstructed block corresponding to the current CU is output.

When the quantization parameter of the point at the specific location is calculated, an input is a quantization parameter (that is, a quantization parameter output by a bit rate control module) of the current CU, a prediction residual value of the point at the specific location in the current CU, and a bit depth of a current picture, and an output is the quantization parameter of the point at the specific location in the current CU. In point prediction, an adjusted quantization parameter is used to perform dequantization for the point at the specific location. In point prediction, the quantization parameter of the point at the specific location is calculated as follows:

(a) Calculate the prediction residual value PredResiTmp of the point at the specific location in the current CU: A horizontal index of the point at the specific location in the current CU is x in the current CU, a vertical index is y, and I indicates a reconstructed sample value matrix of the current CU. The prediction residual value PredResiTmp of the point at the specific location in the current CU may be obtained by calculating a gap between a reconstruction value of a point on an upper side of the point and a reconstruction value of an adjacent point on a left or right side of the point on the upper side.

Refer to FIG. 5. If a point is located in the first row of the current CU and is the 1st point that uses the T prediction manner, PredResiTmp is equal to a gap between a reconstruction value of a point on an upper side of the point and a reconstruction value of an adjacent point on a right side of the point on the upper side, and a calculation formula is PredResiTmp=Abs(I[x][y-1]-I[x+1][y-1]). Otherwise, if a point is located in the first row of the current CU and is not the 1st

point that uses the T prediction manner, PredResiTmp is equal to an average value of gaps between a reconstruction value of a point on an upper side of the point and reconstruction values of adjacent points on a left side and a right side of the point on the upper side, and a calculation formula is PredResiTmp=(Abs(I[x][y-1]-1[x-1][y-1])+Abs(I[x][y-1]-I[x+1][y-1])+1)>>1.

(b) Calculate the quantization parameter PixelQp of the point at the specific location in the current CU. A process is as follows:

(1) Calculate an adjustment lower limit JndQp of the quantization parameter PixelQp of the point at the specific location.

The adjustment lower limit JndQp of the quantization parameter of the point at the specific location is calculated based on a picture complexity level k of the current CU, the bit depth BitDepth, and the prediction residual value of the point at the specific location. If the picture complexity level k of the current CU is less than or equal to X1, and the prediction residual value PredResiTmp of the point at the specific location is less than or equal to ResiThres0, JndQp=X2+Clip(0,X3,(BitDepth-X4)>>X5). Otherwise, JndQp=Clip(0,X3,(BitDepth-X4)>>X5)+X6. X1, X2, X3, X4, X5, and X6 are agreed threshold parameters, and ResiThres0 indicates a zeroth gradient threshold for quantization parameter adjustment.

(2) Calculate the quantization parameter PixelQp of the point at the specific location in the current CU.

PixelQp is calculated based on the picture complexity level k of the current CU, the quantization parameter Qp of the current CU, and the adjustment lower limit JndQp of the quantization parameter. If the quantization parameter Qp of the current CU is greater than JndQp, the prediction residual value PredResiTmp of the point at the specific location is less than or equal to ResiThres0, and the picture complexity level k of the current CU is greater than or equal to ComplexTh, PixelQp=Max(Qp-X7,JndQp). Otherwise, if the quantization parameter Qp of the current CU is greater than JndQp, and the prediction residual value PredResiTmp of the point at the specific location is less than or equal to ResiThres1, PixelQp=Max(Qp-X8,JndQp). Otherwise, PixelQp is equal to Qp. ResiThres0 indicates the zeroth gradient threshold for quantization parameter adjustment, ResiThres1 indicates a first gradient threshold for quantization parameter adjustment, and ComplexTh indicates a complexity threshold for quantization parameter adjustment.

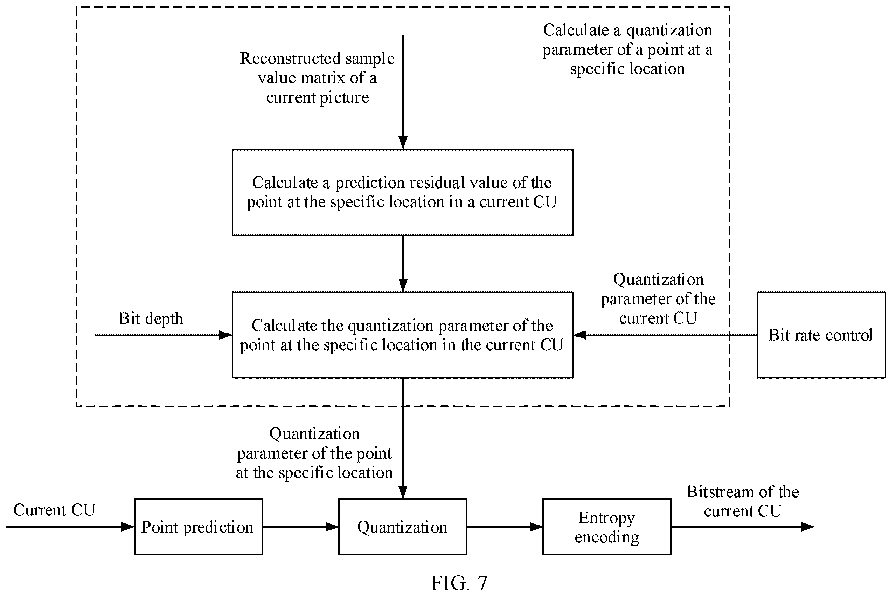

FIG. 7 is a flowchart of obtaining a quantization parameter by an encoder side. As shown in FIG. 7, on the encoder side, a quantization parameter of a point (corresponding to the current point) at a specific location in a current CU is adjusted in point prediction. The specific location is a location that is located in a first row of the current CU and that uses a T prediction manner.

After the current CU is input to an encoder, point prediction, quantization, and entropy encoding are performed, and finally a bitstream of the CU is output.

In point prediction, an adjusted quantization parameter is used to perform quantization for the point at the specific location. For a calculation process of the quantization parameter of the point at the specific location, refer to the calculation process in the embodiment shown in FIG. 6. Details are not described herein again.

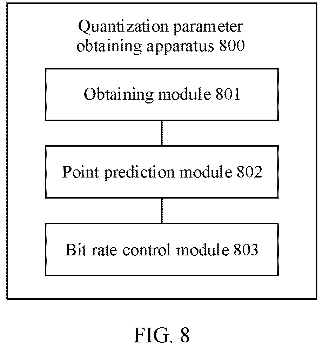

FIG. 8 is a diagram of an example structure of a quantization parameter obtaining apparatus 800 according to an embodiment of this application. As shown in FIG. 8, the quantization parameter obtaining apparatus 800 in this embodiment may be applied to the decoder in the embodiment shown in FIG. 1 or the encoder in the embodiment shown in FIG. 2. The quantization parameter obtaining apparatus 800 may include an obtaining module 801, a point prediction module 802, and a bit rate control module 803.

In a point prediction mode, the obtaining module 801 is configured to: obtain a bit depth of a current picture; obtain a quantization parameter QP of a current coding unit CU, where the current CU belongs to the current picture; and obtain a picture complexity level of the current CU; the point prediction module 802 is configured to obtain a prediction residual value of a current point, where the current point is located in a first row of the current CU, a prediction value of the current point is a reconstruction value of a reference point, and the reference point is located on an upper side of the current point; and the bit rate control module 803 is configured to obtain a QP of the current point based on the bit depth of the current picture, the QP of the current CU, the picture complexity level of the current CU, and the prediction residual value of the current point.

In a possible implementation, the bit rate control module 803 is specifically configured to: obtain an adjustment lower limit of the QP of the current point based on the bit depth of the current picture, the picture complexity level of the current CU, and the prediction residual value of the current point; and obtain the QP of the current point based on the picture complexity level of the current CU, the QP of the current CU, and the adjustment lower limit.

In a possible implementation, the bit rate control module 803 is specifically configured to: when a first condition is met, obtain the adjustment lower limit of the QP of the current point through calculation according to the following formula (1):

$$JndQp = X2 + Clip(0, X3, (BitDepth - X4) \gg X5) \ (1),$$

where

the first condition includes: k≤X1, and PredResiTmp≤ResiThres0; or
when the first condition is not met, obtain the adjustment lower limit of the QP of the current point through calculation according to the following formula (2):

$$JndQp = Clip(0, X3, (BitDepth - X4) \gg X5) + X6 \ (2),$$

where
JndQp indicates the adjustment lower limit of the QP of the current point, BitDepth indicates the bit depth of the current picture, k indicates the picture complexity level of the current CU, PredResiTmp indicates the prediction residual value of the current point, X1, X2, X3, X4, X5, and X6 are preset parameters, and ResiThres0 indicates a zeroth gradient threshold for QP adjustment.

In a possible implementation, the bit rate control module 803 is specifically configured to: when a second condition is met, obtain the QP of the current point through calculation according to the following formula (3):

$$PixelQp = Max(Qp - X7, JndQp) \ (3),$$

where

the second condition includes: Qp>JndQp, PredResiTmp≤ResiThres0, and k≥ComplexTh;
when the second condition is not met and a third condition is met, obtain the QP of the current point through calculation according to the following formula (4):

$$PixelQp = Max(Qp - X8, JndQp) \ (4),$$

where
the third condition includes: Qp>JndQp, and PredResiTmp≤ResiThres1; or
when both the second condition and the third condition are not met, obtain the QP of the current point through calculation according to the following formula (5):

$$PixelQp = Qp \ (5),$$

where
PixelQp indicates the QP of the current point, k indicates the picture complexity level of the current CU, PredResiTmp indicates the prediction residual value of the current point, Qp indicates the QP of the current CU, JndQp indicates the adjustment lower limit, X7 and X8 are preset parameters, ResiThres0 indicates the zeroth gradient threshold for QP adjustment, ResiThres1 indicates a first gradient threshold for QP adjustment, and ComplexTh indicates a complexity threshold for QP adjustment.

In a possible implementation, the point prediction module 802 is specifically configured to: when the current point is located at a first location in the first row of the current CU, obtain the reconstruction value of the reference point and a reconstruction value of a first point, where the first point is located on a right side of the reference point; and obtain the prediction residual value of the current point based on the reconstruction value of the reference point and the reconstruction value of the first point.

In a possible implementation, the point prediction module 802 is specifically configured to: when the current point is located at a non-first location in the first row of the current CU, obtain the reconstruction value of the reference point, a reconstruction value of a first point, and a reconstruction value of a second point, where the first point is located on a right side of the reference point, and the second point is located on a left side of the reference point; and obtain the prediction residual value of the current point based on the reconstruction value of the reference point, the reconstruction value of the first point, and the reconstruction value of the second point.

In a possible implementation, the point prediction module 802 is specifically configured to obtain the prediction residual value of the current point through calculation according to the following formula (6):

$$PredResiTmp = Abs(\boldsymbol{I}[x][y-1] - \boldsymbol{I}[x+1][y-1]) \ (6),$$

where

PredResiTmp indicates the prediction residual value of the current point, I indicates a reconstructed sample value matrix of the current picture, x indicates an element in an $x^{th}$ column of the reconstructed sample value matrix, and y indicates an element in a $y^{th}$ row of the reconstructed sample value matrix.

In a possible implementation, the point prediction module 802 is specifically configured to obtain the prediction residual value of the current point through calculation according to the following formula (7):

PredResiTmp = (Abs(I[x][y - 1] - I[x - 1][y - 1])) + (Abs(I[x][y - 1] - *I*[x + 1][y - 1]))                    (7)

where

PredResiTmp indicates the prediction residual value of the current point, I indicates a reconstructed sample value matrix of the current picture, x indicates an element in an $x^{th}$ column of the reconstructed sample value matrix, and y indicates an element in a $y^{th}$ row of the reconstructed sample value matrix.

The apparatus in this embodiment may be configured to perform the technical solution in the method embodiment shown in FIG. 4. Implementation principles and technical effect thereof are similar. Details are not described herein again.

In an implementation process, steps in the foregoing method embodiments can be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The memory in the foregoing embodiments may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions in this application essentially, or the part contributing to the conventional technology, or a part of the technical solutions may be implemented in a form of a software product. The computer software product is stored in a storage medium and includes several instructions for instructing a computer device (a personal computer, a server, a network device, or the like) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A quantization parameter obtaining method, wherein the method is applicable to a point prediction mode, and the method comprises:

   obtaining a bit depth of a current picture;
   obtaining a quantization parameter QP of a current coding unit CU, wherein the current CU belongs to the current picture;
   obtaining a picture complexity level of the current CU;
   obtaining a prediction residual value of a current point, wherein the current point is located in a first row of the current CU, a prediction value of the current point is a reconstruction value of a reference point, and the reference point is located on an upper side of the current point; and
   obtaining a QP of the current point based on the bit depth of the current picture, the QP of the current CU, the picture complexity level of the current CU, and the prediction residual value of the current point.

2. The method according to claim 1, wherein the obtaining the QP of the current point based on the bit depth of the current picture, the QP of the current CU, the picture complexity level of the current CU, and the prediction residual value of the current point comprises:

   obtaining an adjustment lower limit of the QP of the current point based on the bit depth of the current picture, the picture complexity level of the current CU, and the prediction residual value of the current point; and
   obtaining the QP of the current point based on the picture complexity level of the current CU, the QP of the current CU, and the adjustment lower limit.

3. The method according to claim 2, wherein the obtaining the adjustment lower limit of the QP of the current point based on the bit depth of the current picture, the picture complexity level of the current CU, and the prediction residual value of the current point comprises:

   when a first condition is met, obtaining the adjustment lower limit of the QP of the current point through calculation according to the following formula (1):

$$JndQp = X2 + Clip(0, X3, (BitDepth - X4) \gg X5) \ (1),$$

wherein
the first condition comprises: k≤X1, and PredResiTmp≤ResiThres0; or
when the first condition is not met, obtaining the adjustment lower limit of the QP of the current point through calculation according to the following formula (2):

$$JndQp = Clip(0, X3, (BitDepth - X4) \gg X5) + X6 \ (2),$$

wherein
JndQp indicates the adjustment lower limit of the QP of the current point, BitDepth indicates the bit depth of the current picture, k indicates the picture complexity level of the current CU, PredResiTmp indicates the prediction residual value of the current point, X1, X2, X3, X4, X5, and X6 are preset parameters, and ResiThres0 indicates a zeroth gradient threshold for QP adjustment.

4. The method according to claim 2 or 3, wherein the obtaining the QP of the current point based on the picture complexity level of the current CU, the QP of the current CU, and the adjustment lower limit comprises:

   when a second condition is met, obtaining the QP of the current point through calculation according to the following formula (3):

$$PixelQp = Max(Qp - X7, JndQp) \ (3),$$

wherein
the second condition comprises: Qp>JndQp, PredResiTmp≤ResiThres0, and k≥ComplexTh;
when the second condition is not met and a third condition is met, obtaining the QP of the current point through calculation according to the following formula (4):

$$PixelQp = Max(Qp - X8, JndQp) \ (4),$$

wherein
the third condition comprises: Qp>JndQp, and PredResiTmp≤ResiThres1; or
when both the second condition and the third condition are not met, obtaining the QP of the current point through calculation according to the following formula (5):

$$PixelQp = Qp \ (5),$$

wherein
PixelQp indicates the QP of the current point, k indicates the picture complexity level of the current CU, PredResiTmp indicates the prediction residual value of the current point, Qp indicates the QP of the current CU, JndQp indicates the adjustment lower limit, X7 and X8 are preset parameters, ResiThres0 indicates the zeroth gradient threshold for QP adjustment, ResiThresl indicates a first gradient threshold for QP adjustment, and ComplexTh indicates a complexity threshold for QP adjustment.

5. The method according to any one of claims 1 to 4, wherein the obtaining the prediction residual value of the current point comprises:

   when the current point is located at a first location in the first row of the current CU, obtaining the reconstruction value of the reference point and a reconstruction value of a first point, wherein the first point is located on a right side of the reference point; and
   obtaining the prediction residual value of the current point based on the reconstruction value of the reference point and the reconstruction value of the first point.

6. The method according to any one of claims 1 to 4, wherein the obtaining the prediction residual value of the current point comprises:

   when the current point is located at a non-first location in the first row of the current CU, obtaining the reconstruction value of the reference point, a reconstruction value of a first point, and a reconstruction value of a second point, wherein the first point is located on a right side of the reference point, and the second point is located on a left side of the reference point; and

obtaining the prediction residual value of the current point based on the reconstruction value of the reference point, the reconstruction value of the first point, and the reconstruction value of the second point.

7. The method according to claim 5, wherein the obtaining the prediction residual value of the current point based on the reconstruction value of the reference point and the reconstruction value of the first point comprises:

obtaining the prediction residual value of the current point through calculation according to the following formula (6):

$$PredResiTmp = Abs(\boldsymbol{I}[x][y-1] - \boldsymbol{I}[x+1][y-1]) \ (6),$$

wherein
PredResiTmp indicates the prediction residual value of the current point, I indicates a reconstructed sample value matrix of the current picture, x indicates an element in an $x^{th}$ column of the reconstructed sample value matrix, and y indicates an element in a $y^{th}$ row of the reconstructed sample value matrix.

8. The method according to claim 6, wherein the obtaining the prediction residual value of the current point based on the reconstruction value of the reference point, the reconstruction value of the first point, and the reconstruction value of the second point comprises:

obtaining the prediction residual value of the current point through calculation according to the following formula (7):

PredResiTmp = (Abs(I[x][y - 1] - I[x - 1][y - 1])) + (Abs(I[x][y - 1] - I[x + 1][y - 1]))          (7),

wherein
PredResiTmp indicates the prediction residual value of the current point, **I** indicates a reconstructed sample value matrix of the current picture, x indicates an element in an $x^{th}$ column of the reconstructed sample value matrix, and y indicates an element in a $y^{th}$ row of the reconstructed sample value matrix.

9. A quantization parameter obtaining apparatus, wherein the apparatus is applicable to a point prediction mode, and the apparatus comprises:

an obtaining module, configured to: obtain a bit depth of a current picture; obtain a quantization parameter QP of a current coding unit CU, wherein the current CU belongs to the current picture; and obtain a picture complexity level of the current CU;
a point prediction module, configured to obtain a prediction residual value of a current point, wherein the current point is located in a first row of the current CU, a prediction value of the current point is a reconstruction value of a reference point, and the reference point is located on an upper side of the current point; and
a bit rate control module, configured to obtain a QP of the current point based on the bit depth of the current picture, the QP of the current CU, the picture complexity level of the current CU, and the prediction residual value of the current point.

10. The apparatus according to claim 9, wherein the bit rate control module is specifically configured to: obtain an adjustment lower limit of the QP of the current point based on the bit depth of the current picture, the picture complexity level of the current CU, and the prediction residual value of the current point; and obtain the QP of the current point based on the picture complexity level of the current CU, the QP of the current CU, and the adjustment lower limit.

11. The apparatus according to claim 10, wherein the bit rate control module is specifically configured to: when a first condition is met, obtain the adjustment lower limit of the QP of the current point through calculation according to the following formula (1):

$$JndQp = X2 + Clip(0, X3, (BitDepth - X4) \gg X5) \ (1),$$

wherein

the first condition comprises: k≤X1, and PredResiTmp≤ResiThres0; or
when the first condition is not met, obtain the adjustment lower limit of the QP of the current point through calculation according to the following formula (2):

$$JndQp = Clip(0, X3, (BitDepth - X4) \gg X5) + X6\ (2),$$

wherein
JndQp indicates the adjustment lower limit of the QP of the current point, BitDepth indicates the bit depth of the current picture, k indicates the picture complexity level of the current CU, PredResiTmp indicates the prediction residual value of the current point, X1, X2, X3, X4, X5, and X6 are preset parameters, and ResiThres0 indicates a zeroth gradient threshold for QP adjustment.

12. The apparatus according to claim 10 or 11, wherein the bit rate control module is specifically configured to: when a second condition is met, obtain the QP of the current point through calculation according to the following formula (3):

$$PixelQp = Max(Qp - X7, JndQp)\ (3),$$

wherein

the second condition comprises: Qp>JndQp, PredResiTmp≤ResiThres0, and k≥ComplexTh;
when the second condition is not met and a third condition is met, obtain the QP of the current point through calculation according to the following formula (4):

$$PixelQp = Max(Qp - X8, JndQp)\ (4),$$

wherein
the third condition comprises: Qp>JndQp, and PredResiTmp≤ResiThres1; or
when both the second condition and the third condition are not met, obtain the QP of the current point through calculation according to the following formula (5):

$$PixelQp = Qp\ (5),$$

wherein
PixelQp indicates the QP of the current point, k indicates the picture complexity level of the current CU, PredResiTmp indicates the prediction residual value of the current point, Qp indicates the QP of the current CU, JndQp indicates the adjustment lower limit, X7 and X8 are preset parameters, ResiThres0 indicates the zeroth gradient threshold for QP adjustment, ResiThres1 indicates a first gradient threshold for QP adjustment, and ComplexTh indicates a complexity threshold for QP adjustment.

13. The apparatus according to any one of claims 9 to 12, wherein the point prediction module is specifically configured to: when the current point is located at a first location in the first row of the current CU, obtain the reconstruction value of the reference point and a reconstruction value of a first point, wherein the first point is located on a right side of the reference point; and obtain the prediction residual value of the current point based on the reconstruction value of the reference point and the reconstruction value of the first point.

14. The apparatus according to any one of claims 9 to 12, wherein the point prediction module is specifically configured to: when the current point is located at a non-first location in the first row of the current CU, obtain the reconstruction value of the reference point, a reconstruction value of a first point, and a reconstruction value of a second point, wherein the first point is located on a right side of the reference point, and the second point is located on a left side of the reference point; and obtain the prediction residual value of the current point based on the reconstruction value of the reference point, the reconstruction value of the first point, and the reconstruction value of the second point.

15. The apparatus according to claim 13, wherein the point prediction module is specifically configured to obtain the prediction residual value of the current point through calculation according to the following formula (6):

$$PredResiTmp = Abs(\boldsymbol{I}[x][y-1] - \boldsymbol{I}[x+1][y-1]) \ (6),$$

wherein
PredResiTmp indicates the prediction residual value of the current point, I indicates a reconstructed sample value matrix of the current picture, x indicates an element in an $x^{th}$ column of the reconstructed sample value matrix, and y indicates an element in a $y^{th}$ row of the reconstructed sample value matrix.

16. The apparatus according to claim 14, wherein the point prediction module is specifically configured to obtain the prediction residual value of the current point through calculation according to the following formula (7):

PredResiTmp = (Abs(I[x][y - 1] - I[x - 1][y - 1])) + (Abs(I[x][y - 1] - I[x + 1][y - 1]))          (7),

wherein
PredResiTmp indicates the prediction residual value of the current point, I indicates a reconstructed sample value matrix of the current picture, x indicates an element in an $x^{th}$ column of the reconstructed sample value matrix, and y indicates an element in a $y^{th}$ row of the reconstructed sample value matrix.

17. A decoder, comprising:

   one or more processors; and
   a memory, configured to store one or more programs, wherein
   when the one or more programs are executed by the one or more processors, the one or more processors are enabled to implement the method according to any one of claims 1 to 8.

18. An encoder, comprising:

   one or more processors; and
   a memory, configured to store one or more programs, wherein
   when the one or more programs are executed by the one or more processors, the one or more processors are enabled to implement the method according to any one of claims 1 to 8.

19. A computer-readable storage medium, comprising a computer program, wherein when the computer program is executed by a computer, the computer is enabled to perform the method according to any one of claims 1 to 8.

20. A computer program product, wherein the computer program product comprises instructions, and when the instructions are run on a computer or a processor, the computer or the processor is enabled to implement the method according to any one of claims 1 to 8.

CU 2

Quantization
parameter

Number of
coded bits

Quantization
parameter

Number of
coded bits

Bit rate control

Bit rate
control

Decoder

Entropy
decoding

Dequantization

Prediction

Complexity
level

Decoder

Entropy
decoding

Dequantization

Prediction

Input a
bitstream

Output a
reconstructed
picture

Input a
bitstream

Output a
reconstructed
picture

FIG. 1

EP 4 668 743 A1

CU 1

CU 2

Quantization
parameter

Number of
coded bits

Bit rate control

Quantization
parameter

Number of
coded bits

Bit rate
control

Encoder

Prediction | Quantization | Entropy
encoding

Encoder

Prediction | Quantization | Entropy
encoding

Input a
coding unit

Output a
bitstream

Picture
content

Input a
coding unit

Output a
bitstream

FIG. 2

| | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| 0 | T | RL | T | RL | T | RL | T | RL | T | RL | T | RL | T | RL | T | L |
| 1 | T | RL | T | RL | T | RL | T | RL | T | RL | T | RL | T | RL | T | L |

FIG. 3

<u>400</u>

| Obtain a bit depth of a current picture | 401 |

↓

| Obtain a QP of a current CU, where the current CU belongs to the current picture | 402 |

↓

| Obtain a complexity level of the current CU | 403 |

↓

| Obtain a prediction residual value of a current point, where the current point is located in a first row of the current CU, a prediction value of the current point is a reconstruction value of a reference point, and the reference point is located on an upper side of the current point | 404 |

↓

| Obtain a QP of the current point based on the bit depth of the current picture, the QP of the current CU, the complexity level of the current CU, and the prediction residual value of the current point | 405 |

FIG. 4

| | x | x+1 | | x−1 | x | x+1 | | | | | | | | | | |
|---|---|---|---|---|---|---|---|---|---|---|---|---|---|---|---|---|
| y−1 | | | | | | | | | | | | | | | | |
| y | T1 | | | T2 | | | | | | | | | | | | L |
| y+1 | | | | | | | | | | | | | | | | |

FIG. 5

Calculate a quantization parameter of a point at a specific location

Reconstructed sample value matrix of a current picture

Calculate a prediction residual value of the point at the specific location in a current CU

Bit depth

Calculate the quantization parameter of the point at the specific location in the current CU

Quantization parameter of the current CU

Bit rate control

Quantization parameter of the point at the specific location

Bitstream of the current CU

Entropy decoding

Dequantization

Point prediction

Reconstructed block

FIG. 6

Calculate a quantization
parameter of a point at a
specific location

Reconstructed sample
value matrix of a
current picture

Calculate a prediction residual value of the
point at the specific location in a current CU

Quantization
parameter of the
current CU

Bit depth

Calculate the quantization parameter of the
point at the specific location in the current CU

Bit rate control

Quantization
parameter of the point
at the specific location

Current CU

Point prediction

Quantization

Entropy
encoding

Bitstream of the
current CU

FIG. 7

Quantization parameter
obtaining apparatus 800

Obtaining module 801

Point prediction module 802

Bit rate control module 803

FIG. 8

## INTERNATIONAL SEARCH REPORT

| International application No. |
| --- |
| **PCT/CN2024/080498** |

### A. CLASSIFICATION OF SUBJECT MATTER

H04N 19/124(2014.01)i

According to International Patent Classification (IPC) or to both national classification and IPC

### B. FIELDS SEARCHED

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, VEN, DWPI, CNTXT, EPTXT, USTXT, JPTXT, IEEE, CNKI, 百度, BAIDU: 点, 像素, 量化, 参数, 调整, 调节, 修改, 编码单元, 块, 复杂度, 纹理, 残差, 比特, 位深, 预测, point, pixel, quantization, parameter, QP, adjust, CU, bit, depth, residual, prediction

### C. DOCUMENTS CONSIDERED TO BE RELEVANT

| Category* | Citation of document, with indication, where appropriate, of the relevant passages | Relevant to claim No. |
| --- | --- | --- |
| A | CN 114598873 A (HUAWEI TECHNOLOGIES CO., LTD.) 07 June 2022 (2022-06-07) description, paragraphs [0228]-[0318], and figures 5-10 | 1-20 |
| A | CN 113747153 A (HANGZHOU ARCVIDEO TECHNOLOGY CO., LTD.) 03 December 2021 (2021-12-03) entire document | 1-20 |
| A | CN 105763877 A (QINGDAO HISENSE ELECTRIC CO., LTD.) 13 July 2016 (2016-07-13) entire document | 1-20 |
| A | JP 2018182484 A (CANON K. K.) 15 November 2018 (2018-11-15) entire document | 1-20 |

☐ Further documents are listed in the continuation of Box C.   ☑ See patent family annex.

| * Special categories of cited documents: | | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **27 May 2024** | **29 May 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/080498**

| Patent document cited in search report | | | Publication date (day/month/year) | Patent family member(s) | | | Publication date (day/month/year) |
|---|---|---|---|---|---|---|---|
| CN | 114598873 | A | 07 June 2022 | CN | 114598873 | B | 20 June 2023 |
| | | | | EP | 4246971 | A1 | 20 September 2023 |
| CN | 113747153 | A | 03 December 2021 | | None | | |
| CN | 105763877 | A | 13 July 2016 | CN | 105763877 | B | 01 January 2019 |
| JP | 2018182484 | A | 15 November 2018 | | None | | |

Form PCT/ISA/210 (patent family annex) (July 2022)